# EUROPEAN PATENT SPECIFICATION

(11) **EP 1 435 313 B1**
(45) Date of publication and mention of the grant of the patent: **09.05.2007**
(21) Application number: 03250045.6
(22) Date of filing: 03.01.2003
(51) Int. Cl.: B60R 22/34

(54) **Retractor**
Retraktor
Rétracteur

(43) Date of publication of application: 07.07.2004
(73) Proprietor: KEY SAFETY SYSTEMS, INC., Sterling Heights, MI 48314 (US)
(72) Inventor: Smith, David, Cumbria CA8 1AX (GB); Bowman, Paul, Cumbria CA4 8QG (GB); Brotherston Routledge, George, Carlisle, Cumbria CA3 0AG (GB); Nichol, Terrence, Dalston, Cumbria CA5 7AA (GB); Smithson, Alan, George, Corby Hill, Cumbria CA4 8QD (GB)
(74) Representative: Freeman, Jacqueline Carol

(56) References cited:
- EP-A- 0 703 124
- US-A- 5 924 641
- US-B1- 6 454 201

## Description

The present invention relates to a retractor for a vehicle safety restraint seat belt.

A safety restraint retractor traditionally comprises a pressed steel U-shaped frame within which is mounted a rotatable cylindrical spool serving as a reservoir for seat belt webbing. The spool rotates about its longitudinal axis to pay-out or wind-in webbing as required, but is biased towards a webbing wound position so as to maintain the safety belt securely across the body of a vehicle occupant without slack developing. The occupant is able to move around within limits, for example, to reach a glove compartment or radio controls. However in the event of a crash, a sensor detects a sudden deceleration of the vehicle and locks the spool against further pay-out of webbing, thus securing the occupant against forward motion and preventing impact with internal parts of the vehicle. US 6 454 201 B1 discloses such a retractor and includes all the features of the preamble of claim 1.

The spool is locked by means of a die cast non-ferrous lockbar mounted across the open part of the arms of the U-shaped frame. The lockbar pivots in cut-outs in the frame arms, into and out of its locking position. Considerable tensile forces are transmitted to the frame during a crash incident and, to resist premature failure of the frame due to its inherent instability, thicker material and additional cross bracing are traditionally employed in the vicinity of the relevant area.

However this extra material and cross bracing results in additional weight and cost of the frame assembly. It would be advantageous to stabilize the frame without the extra material and improve the tensile load capacity with no extra parts, weight or cost.

According to the present invention there is provided a U-shaped frame for a vehicle safety restraint retractor comprising two spaced arms of a material of a predetermined thickness and having a cut-out in each arm for receiving a lockbar, wherein the cut-out (2) has an edge comprising a land portion for supporting the lockbar, which portion is of a reduced thickness compared to the predetermined thickness to present a reduced surface area to the lockbar.

According to one embodiment of the present invention the edge further comprises a second section which tapers or steps away from the land portion and from the cut-out.

Hence the edge of the cut-out may be chamfered or otherwise cut-away or tapered in part.

Preferably the material of the frame is pressed steel. The frame may be used in a retractor with a lockbar formed of die-cast non-ferrous material.

For a better understanding of the invention, and to show how the same may be carried into effect, reference will now be made to the accompanying drawings, in which:
Figure 1 is a side view of a retractor frame assembly according to the present invention.
Figure 2 is a cross section taken along line A-A in figure 1.
Figure 3 is a close up of the area B of figure 2.

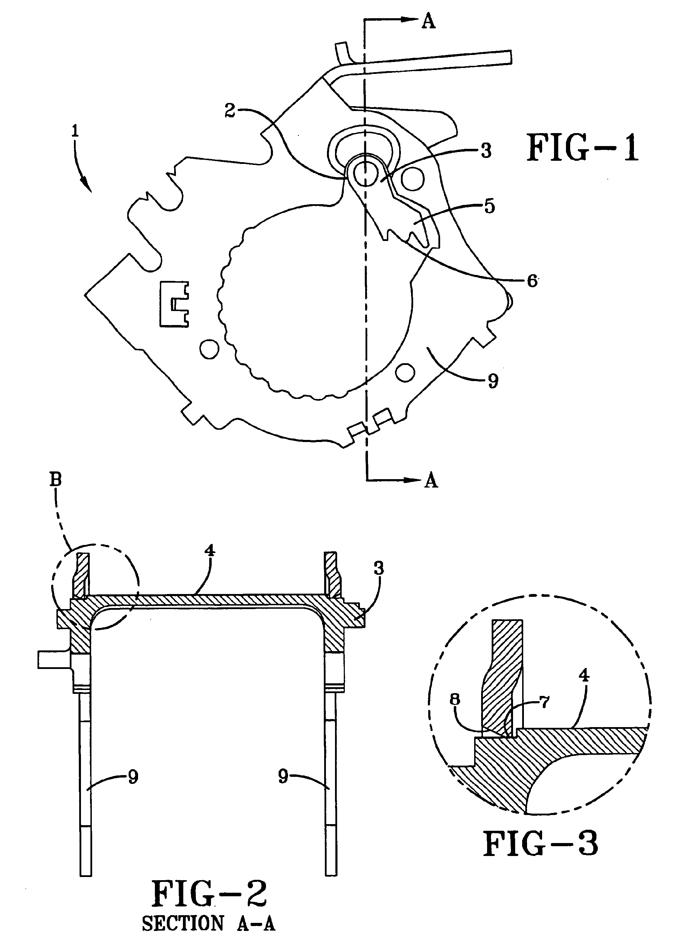

In figure 1 one arm 9 of a U-shaped frame for a retractor is shown in side view and indicated by the reference 1. A cut-out 2 is provided in the upper part of the frame 1 and a lockbar 3 rests in this cut-out 2. The lockbar 3 comprises an elongate rod 4 passing through the cut-out 2 in the arm of the frame shown and also through a corresponding cut-out in the other arm of the frame 1 (seen in figure 2).

Fixed to each end of the rod 4 is a locking pawl 5 with locking teeth 6. The lockbar is pivotable in the cut-outs 2 between an unengaged position as shown, and a locking position in which the teeth 6 engage with teeth on a spool assembly to prevent rotation of the spool and thus prevent pay-out of seat belt webbing in the event of a crash.

Figure 2 is a cross section through line A-A of figure 1 showing the two arms 9 of the frame 1 with the lockbar 3 resting on narrow lands 7 in the cut-outs 2. These narrow lands 7 lie on at least a part of the edge of each cut-out 2 to present a relatively sharp edge, ie small surface area to the rod 4 of the lockbar 3. These lands 7 generally will permanently contact the rod 4. As the load increases they will penetrate the rod 4 and the lockbar 3 will be loaded with the increasing crash forces and experiences tensile loading along its length. This effectively holds the frame arms 9 together against their natural tendency to burst apart.

Figure 3 shows an enlarged view of the area B of figure 2, in which the edge of each cut-out 2 has a second section 8 which tapers away from the land 7 in the region in which the lockbar 3 contacts the edge of the cut-out 2.

The frame bearing second section 8 may alternatively step away from the land 7. The chamfer taper or step helps to prevent excessive indentation of the frame 1 into the lockbar 3 which may lead to premature failure of the lockbar 3 and thus of the retractor. This second section 8 comes into effect as the load increases and serves to reduce the contact pressure between the lockbar 3 and the frame 1.

This invention can achieve an improvement in tensile load capacity of a safety restraint retractor with no additional parts, weight or cost.

## Claims

1. A U-shaped frame (1) for a vehicle safety restraint retractor comprising two spaced arms (9) of a material of a predetermined thickness and having a cut-out (2) in each arm (9) for receiving a lockbar (3), wherein the cut-out (2) has an edge comprising a land portion (7) for supporting the lockbar (3), **characterized in that** said land portion (7) is of a reduced thickness compared to the predetermined thickness to present a reduced surface area to the lockbar (3).

2. A frame (1) according to claim 1 wherein the edge further comprises a second section (8) which tapers away from the land portion (7) and from the cut-out(2).

3. A frame according to claim 1 wherein the second section (8) steps away from the land portion (7) and from the cut-out (2).

4. A frame according to any one of the preceding claims wherein the material is pressed steel.

5. A retractor for a vehicle safety restraint comprising a frame according to any one of the preceding claims.

6. A retractor according to claim 5 further comprising a lockbar formed from die-cast non-ferrous material.

7. A retractor according to any one of claims 5 or 6 where the frame is formed from pressed steel.

## Patentansprüche

1. U-förmiger Rahmen (1) für einen Fahrzeugsicherheitsretraktor mit Rückhaltesystem, umfassend zwei voneinander beabstandete Arme (9) eines Materials einer vorherbestimmten Dicke und mit einem Ausschnitt (2) in jedem Arm (9) zur Aufnahme einer Sperrschiene (3), wobei der Ausschnitt (2) eine Kante hat, die einen Stegabschnitt (7) zum Abstützen der Sperrschiene (3) aufweist, **dadurch gekennzeichnet, dass** der Stegabschnitt (7) eine reduzierte Dicke verglichen mit der vorherbestimmten Dicke aufweist, um der Sperrschiene (3) einen reduzierten Oberflächenbereich zu bieten.

2. Rahmen (1) nach Anspruch 1, wobei die Kante ferner einen zweiten Abschnitt (8) aufweist, der sich vom Stegabschnitt (7) und vom Ausschnitt (2) weggehend verjüngt.

3. Rahmen nach Anspruch 1, wobei sich der zweite Abschnitt (8) stufenförmig vom Stegabschnitt (7) und Ausschnitt (2) weggehend erstreckt.

4. Rahmen nach einem der vorhergehenden Ansprüche, wobei das Material Pressstahl ist.

5. Retraktor für ein Fahrzeugsicherheitsrückhaltesystem, umfassend einen Rahmen nach einem der vorhergehenden Ansprüche.

6. Retraktor nach Anspruch 5, ferner umfassend eine Sperrschiene, die aus Druckguss-Nichteisen-Material geformt ist.

7. Retraktor nach Anspruch 5 oder Anspruch 6, wobei der Rahmen aus Pressstahl geformt ist.

## Revendications

1. Cadre en U (1) pour un enrouleur de ceinture de sécurité d'un véhicule, comprenant deux bras espacés (9) composés d'un matériau ayant une épaisseur prédéterminée, une entaille (2) étant formée dans chaque bras (9) pour recevoir une barre de verrouillage (3), l'entaille (2) comportant un bord comprenant une partie de méplat (7) pour supporter la barre de verrouillage (3), **caractérisé en ce que** ladite partie de méplat (7) a une épaisseur réduite par rapport à l'épaisseur prédéterminée, pour présenter une aire de surface réduite à la barre de verrouillage (3).

2. Cadre (1) selon la revendication 1, dans lequel le bord comprend en outre une deuxième section (8) effilée à l'écart de la partie de méplat (7) et de l'entaille (2).

3. Cadre selon la revendication 1, dans lequel la deuxième section (8) est graduée à l'écart de la partie de méplat (7) et de l'entaille (2).

4. Cadre selon l'une quelconque des revendications précédentes, dans lequel le matériau est de l'acier embouti.

5. Enrouleur pour une ceinture de sécurité d'un véhicule, comprenant un cadre selon l'une quelconque des revendications précédentes.

6. Enrouleur selon la revendication 5, comprenant en outre une barre de verrouillage composée d'un matériau non ferreux moulé par pression.

7. Enrouleur selon l'une quelconque des revendications 5 ou 6, dans lequel le cadre est composé d'acier embouti.
